(19) Europäisches Patentamt
European Patent Office
Office européen des brevets

(11) **EP 3 724 018 B1**

(12) **EUROPEAN PATENT SPECIFICATION**

(45) Date of publication and mention
of the grant of the patent:
**13.07.2022 Bulletin 2022/28**

(21) Application number: **18830311.9**

(22) Date of filing: **10.12.2018**

(51) International Patent Classification (IPC):
**B60K 7/00** *(2006.01)*     **B60K 1/02** *(2006.01)*
**B62D 5/04** *(2006.01)*     **B62D 7/14** *(2006.01)*
**B60G 17/016** *(2006.01)*   **B62D 6/04** *(2006.01)*

(52) Cooperative Patent Classification (CPC):
**B60K 7/0007; B60G 17/0163; B60K 7/00;**
**B62D 5/0418; B62D 6/04; B62D 7/146;**
B60G 2200/422; B60G 2200/462; B60G 2202/42;
B60G 2202/44; B60G 2204/418; B60G 2300/50;
B60G 2500/42; B60G 2800/24; B60G 2800/962;

(Cont.)

(86) International application number:
**PCT/IB2018/059827**

(87) International publication number:
**WO 2019/116198 (20.06.2019 Gazette 2019/25)**

(54) **SUSPENSION AND TRACTION SYSTEM**

AUFHÄNGUNGS- UND TRAKTIONSSYSTEM

SYSTÈME DE SUSPENSION ET DE TRACTION

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority: **11.12.2017 IT 201700141895**

(43) Date of publication of application:
**21.10.2020 Bulletin 2020/43**

(73) Proprietor: **Texa Dynamics S.R.L.**
**31050 Monastier di Treviso (TV) (IT)**

(72) Inventors:
• **GIROTTO, Adriano**
**31050 Monastier di Treviso (TV) (IT)**
• **VIANELLO, Bruno**
**31050 Monastier di Treviso (TV) (IT)**

(74) Representative: **Citron, Massimiliano**
**Via Primo Maggio, 6**
**31020 San Fior (TV) (IT)**

(56) References cited:
**EP-A1- 2 921 331    WO-A1-2015/155670**
**US-B1- 6 293 561    US-B1- 6 397 134**

(52) Cooperative Patent Classification (CPC): (Cont.)
B60G 2800/963; B60K 2007/003

**Description**

The invention refers - in general - to a suspension and traction system, in particular in electric vehicles.

In the latest generation of electric vehicles, the traction has been moved directly into the wheels. E.g. WO2015155670 describes two electric motors controlled independently of each other, which can vary the distance between the vehicle frame and a wheel. However, no indications are given on how to steer the wheel, a particularly challenging problem due to the complexity of the structure.

The main object of the present invention is to improve WO2015155670, in particular by solving the steering problem in a system like that.

This object is achieved with a system and/or method according to the appended claims, in which the dependent ones define advantageous variants.

A suspension and traction system is proposed for a vehicle equipped with a frame and an propulsive element through rolling on the ground adapted to move the vehicle relative to the ground, comprising:

- two rotary electric motors, which
  are mounted to impart an angular torque to the propulsive element in equal directions in order to propel the vehicle on the ground,

  are independently controllable from one another and
  each comprises a stator and a rotor; wherein

  the two rotors

  are coupled to the propulsive element to transfer to it rotary motion through a transmission shaft, and
  have a common rotation axis which is fixed with respect to the vehicle frame; and

  the stators are

  controllable to rotate about the respective rotor independently of each other, and
  rigidly connected substantially to a same point, external to the motors, for exerting on such point a thrust generated by a coordinated angular displacement of theirs about their respective rotors in opposite angular directions;

- a transmission to transmit the thrust generated on said point to the propulsive element, the thrust thereby determining the relative position of the propulsive element with respect to the frame,
- an electric actuator (e.g. a rotary motor or a linear actuator) mounted to impose a steering angle of the propulsive element.

By *determining the steering angle* it is meant the determination of the instantaneous direction of advancement of the propulsive element. In a rotating wheel this direction can be geometrically indicated by a vector orthogonal to the instantaneous rotation axis or by the direction of a plane orthogonal to the axis of rotation and passing through the wheel.

*Rotor* is commonly used in the art to indicate the rotating part relative to the *stator,* which instead is the immobile part of an electric motor. According to the invention, however, both the *rotor* and the *stator* can move, although the *rotor* is the part that rotates the most because it provides rotary motion to the propulsive element. The *rotor* rotates with the RPM needed to transmit kinetic energy to the propulsive element, the *stator* moves angularly if and when it is necessary to transmit said thrust on said point. Then, by *rotor* or *stator* here it is generally meant two parts of the electric motor which, after a proper power supply, can move relatively with rotary motion. The definition commonly used, however, is useful for identifying in a known electric motor the corresponding parts to *rotor* or *stator* as defined above, which can be exploited interchangeably.

By moving the stators about the common rotational axis of the rotors, a force is produced on said point, exploitable to modify the suspension, e.g. to change the distance between said point and the propulsive element.

The general principle is that expressed in fig. 2 of WO2015155670, here included as reference and to it the reader is relayed. The two electric motors are controlled both to transfer torque to the propulsive element and to adjust the height or distance (e.g. relative to ground or to the propulsive element) of the frame. Note that, to produce a force on said point, it is also possible:

- to move only one stator about the common rotation axis of the rotors; and/or
- to move the two stators in the same angular direction about the common rotation axis of the rotors.

In these cases said point would rotate also or only about the axis X.

With the configuration defined above, it is possible not only to equip the idle wheels of a vehicle with an electric motorization but also to equip it with an integrated suspension.

Being the stators angularly movable with respect to the respective rotor, their angular position around the rotors (and also with respect to the rotational axis of the rotors) can be adjusted, e.g. through control of the torque imparted by a stator on its rotor. Adjusting the position of each stator translates into an adjustment of the position or height of said point, and therefore of the frame with respect to the propulsive element. In fact, when the thrust generated on said point is transferred to the propulsive element, by reaction the frame moves away from the propulsive element.

Other important advantages of the system are that it allows the vehicle to be equipped with active suspensions, able to adapt the balance thereof to the conditions of the road and driving, and that it is easily integratable to the most common suspension standards allowing installation thereof on new or pre-existing vehicles.

Another advantage is that electric motors are separated from the propulsive element through the shaft, therefore the stresses captured by the propulsive element are not discharged on them. This effect is further improved if the transmission shaft comprises at least two segments connected to each other by a joint (e.g. a universal joint), and the rotation axis of the propulsive element is offset with respect to the rotation axis of the rotors. This allows to place the electric motors at points that are more protected and/or easily couplable with the on-board electronics.

The electric motors may be separated from the propulsive element also through a different and/or more complex kinematics comprising a shaft.

Another advantage is that, at the starting or acceleration phase of the vehicle, the system can get a surprising dynamic effect. By controlling the electric motors so that, at the same time, the rotors impart rotary torque to the propulsive element and the stators move to generate on the propulsive element a force directed towards the ground, the initial adhesion of the propulsive element on the ground is greatly improved. Therefore the vehicle can accelerate without the propulsive element smearing or skidding.

The same can happen during the braking phase, in which the electric motors may be controlled in such a way that the stators move to generate a force on the propulsive element directed towards the ground. Thus, the adherence of the vehicle during braking is increased.

In sum, with the aforementioned control a force can be generated which, when the vehicle is stationary or in motion or during acceleration or braking, pushes the propulsive element not only tangentially but also orthogonally to the ground. The same phenomenon occurs naturally in very fast predatory felines, like the cheetah, which accelerates by pushing its hind legs not only backwards but also towards the ground.

Another advantage of the system is the possibility of housing on the propulsive element a safety or parking disc brake, because the actuating elements are external to the propulsive element.

The system also works with a stationary propulsive element, thanks to the reaction forces imparted by the stators on the (still) rotors.

Preferably, the rotors are coupled to the frame through a rotary bearing (e.g., a ball or cylinder bearing) mounted to maintain their rotation axis fixed with respect to the frame.

The transmission to transmit the thrust generated on said point to the propulsive element may have many embodiments.

The transmission may be structured in such a way that the thrust preferably generates also a displacement of said point, which can be exploited to move the propulsive element by means of ropes or chains with appropriate return means. In another embodiment, the transmission comprises a fluid, whose compression is obtained by means of the generated thrust. The pressure increase serves to move the propulsive element, e.g. through a hydraulic piston.

The transmission to transmit the thrust is preferably so structured as to reverse the direction of the thrust generated on said point in order to direct it towards the propulsive element. For that purpose too, and for constructive simplicity, preferably said transmission comprises

> a lever pivoted on the frame,
> the lever comprising an application point for said generated force and a point of force transmission towards the propulsive element, so that when said generated force moves the application point the lever moves the point of force transmission.

In particular, the lever comprises an oscillation axis which is fixed with respect to the frame, so that the lever is oscillating (e.g. like a rocking arm) with respect to the frame. Preferably the oscillation axis of the lever is intermediate to said application point for said generated force and to said point of force transmission towards the propulsive element. In this way the lever is able to reverse the displacement direction of the application point facilitating the transmission of force towards the propulsive element.

In particular, the lever is connected to the stators through two respective rigid arms, wherein each rigid arm has a point or end connected to a stator and a point or end connected to the lever.

In particular, the oscillation axis of the lever is substantially orthogonal to a vertical plane passing through said transmission shaft and/or through the rotation axis of the rotors.

In particular, the propulsive element is connected to the lever by means of a rigid arm.

The system comprises an electronic control unit for controlling said motors. This allows precise, and in particular reliable, control using digital algorithms.

The electronic control unit is configured for controlling the (third) actuator to impose a steering angle of the propulsive element according to a reference value set by the driver of the vehicle.

The reference value may be set e.g. through a steering wheel or a lever, or other means of analog interface. The electronic control unit is connected to a sensor to detect the action of the driver on the steering wheel or the lever, or on the analog interface. From the signal detected by sensor, the electronic control unit determines or calculates a directional reference to be imposed then on the wheel through the third actuator.

The electronic control unit is configured to calculate said steering angle as a function of 1) said directional reference value and 2) of a value indicating said relative position.

This variant can be used to solve the *bump steering* problem. *Bump steering* indicates the tendency of the wheel to steer while it is moving along the suspension stroke, regardless of the driver's control. The problem is felt a lot because *bump steering* does rotate the vehicle by itself when a wheel hits a bump or takes a hole. It goes without saying that it is convenient to be able to control the vehicle even on rough roads. Then the steering angle calculated as defined above may contain two contributions, and the one relative to the value indicating said relative position can be used to solve the *bump steering* problem, or to compensate the inaccuracy in the steering due to *bump steering.*

Another aspect of the invention relates to a *bump steering* compensation method. It is understood that each step of the method described herein is preferably performed by an electronic control unit, which for example is programmable (like a microprocessor or DSP) and executes the method via software program instructions.

The method provides for e.g. detecting in real time the actual steering angle and the actual value of said relative position. With the two values, for example through a table or a mathematical function, a control signal is produced for the (third) actuator so as to always return the steering to the value set by the driver and equal to the value that one would have without the road imperfection.

Or the method provides to detect in real time the actual steering angle and compare it with the nominal one, i.e. the value set by the driver and equal to the value that would be without road imperfection. A difference or inequality between the two values is due to *bump steering.* Said comparison between the value set by the driver and the actual value detected may be carried out e.g. by subtraction, to calculate the difference between the two, but other elaborations are possible. E.g. it is sufficient to establish an order relationship between the actual steering angle and the nominal steering angle, like for example determining which of the two is greater or calculating a binary value that indicates the equality or the inequality.

Preferably, by processing said difference or said order relationship or the result of said comparison, a control signal is produced, e.g. through a table or a mathematical function, for the third actuator so as to always return the steering to the value set by the driver and equal to value that one would have without road imperfection.

Preferably, said difference or said order relationship or the result of said comparison may become a corrective signal, e.g. the input of a feedback system, to modify and correct the steering angle's value in real time. Even more preferably, said corrective signal is sent to the third actuator to produce a corrective shift, as needed to bring the steering angle back to the nominal value.

To simplify the system, it preferably comprises a sensor for detecting said relative position. The sensor is connected to the electronic control unit and sends to it a signal indicative of the relative position.

The value or signal indicating said relative position is obtained by processing feedback signals coming from the first and second motor. In other words, an electronic control already present aboard the motors or a sensor pre-arranged thereon is exploited as sensor.The value or signal indicating said relative position is obtained by processing position signals related to the angular position of the stator of the first and second motor. This solution is characteristic of the active suspension structure defined above, and has the advantage of exploiting components and/or signals already present in the system to add a *bump steering* compensation.

Therefore, the method generally provides for calculating said steering angle as a function of said reference value and of a value indicating said relative position of the stator in such a way to correct the deviation, with respect to said reference value, caused by a vertical oscillation of the propulsive element with respect to its rolling plane (due, for example, to a hole or to a bump).

The advantages of the invention will be clearer from the following description of a preferred embodiment of a suspension and traction system, referring to the attached drawing in which

- Fig. 1 shows a principle block diagram,
- Fig. 2 shows a block diagram for the calculation of a correction value for a steering angle;
- Fig. 3 shows a simplified mechanical scheme, with components illustrated as in use;
- Fig. 4 shows a cross-section of an electric actuator.

In the figures the arrows between components indicate signal lines, wherein the arrow points towards the component that receives the signal.

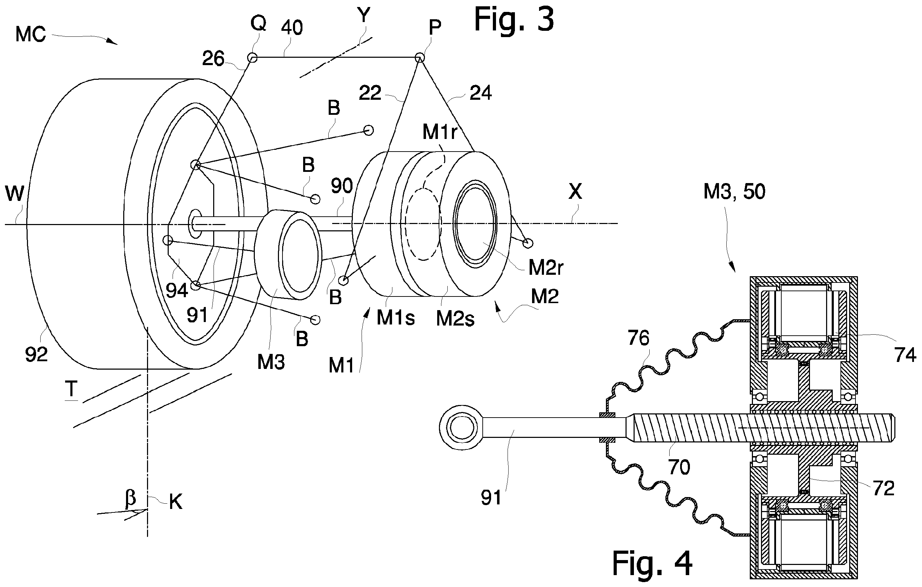

The illustrated system MC is used to control the steering movement of a propulsive element, e.g. in the form of a wheel 92. The wheel 92, by rolling on a ground T (Fig. 3), moves an associated vehicle (not shown). The system MC is e.g. replicated on all the wheels of the vehicle.

The system MC comprises

two identical electric rotary motors M1, M2 which through a shaft 90 are able to rotate the wheel 92; and
a third actuator or motor M3.

The electric power supply of the motors M1, M2, M3 can be obtained, for example. through inverters or power-electronics stages of known topology.

An electronic control unit U, e.g. microprocessor-based, is programmed or configured for controlling the motors M1, M2. E.g. by controlling inverters or electronic power stages, the control unit U is able to control the wheel 92's rotation rate and the height of the point P and Q (see below). To this aim, the electronic control unit U controls the motors M1, M2 through signal lines M1L, M2L, and the third actuator or motor M3 with a signal SM3*.

The two electric motors M1, M2 are formed by a respective stator M1s, M2s and a respective rotor M1r, M2r.

The rotors M1r, M2r are coaxial and have a common rotation axis indicated with X. The axis X is fixed with respect to the vehicle frame, e.g. by mounting the rotors M1r, M2r and/or the shaft 90 on a ball bearing (not shown) having a ring integral with the frame.

Each stator M1s, M2s is connected to a respective rigid arm 22, 24, and the arms 22, 24 are connected to a common point P external to the electric motors M1, M2.

The point P belongs or is connected to the end of a lever 40 which is oscillating, approximately at its own center, about an axis Y fixed with respect to the vehicle frame. The other end of the lever 40 (point Q) is connected to a hub 94 of the wheel 92 by a rigid arm 26.

Preferably the wheel 92 is also connected to suspension arms B, e.g. spring-actuated o dumped-oscillation arms.

The rotation of the rotors M1r, M2r about the axis X causes the wheel 92 to rotate about its rotation axis W.

By controlling the power supply of the electric motors M1, M2 (i.e. by giving more or less power than that required by the wheel 92) it is possible to move the stators M1s, M2s about the axis X simultaneously with opposite angular directions, i.e. one in clockwise direction and one in counter-clockwise direction.

E.g. it is possible to cause the arms 22, 24 to raise and push the point P upwards (in this case the point P moves away from the axis X). The lever 40 then rotates about the axis Y (the angle $\alpha$ formed by the lever 40 and a horizontal plane varies) and moves the point Q downwards. It follows that the arm 26 pushes the hub 94 downwards and towards the ground, thereby obtaining, among other things, a distance variation between the axes W and X, which are parallel in the example. In the example, the axis Y is orthogonal to an imaginary vertical plane passing through X (and/or W).

An upward movement of the hub 94 can be achieved by reversing all the motions described for the previous case (the point P approaches the axis X).

It should be noted that the rotary torque applied to the wheel 92 by the rotors M1r, M2r and the force imparted on the wheel 92 towards the ground by the stators M1s, M2s are independently-controllable variables. So it is e.g. possible, during acceleration, to push the wheel 92 further towards the ground to increase its grip.

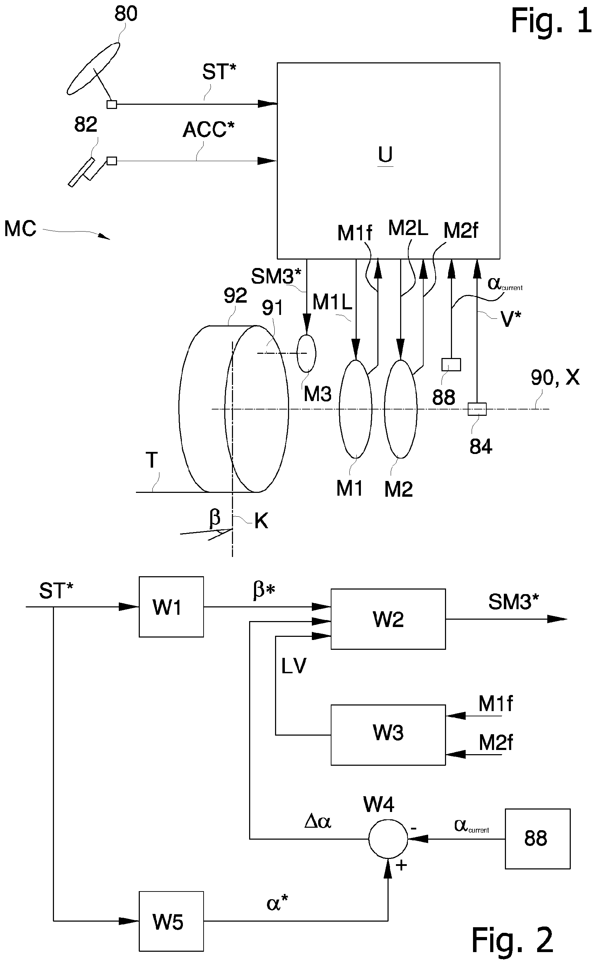

The third motor or actuator M3 is installed on the vehicle to exert a force on the wheel 92 via a drive member 91, e.g. a rigid arm. The force generated by the third motor or actuator M3 is controlled so as to change the steering angle $\beta$ (see Fig. 1 and 3), i.e. to rotate the wheel 92 about a vertical axis K passing through the ground's supporting point of the wheel 92.

The electronic control unit U also controls the third motor or actuator M3. Furthermore, the electronic control unit U is connected

- to a steering control member 80, such as for example a steering wheel or a cloche, which sends to the input of the electronic control unit U a reference signal ST* for steering. The signal ST* contains information or data relating to the direction desired by the driver for the vehicle; and
- to a vehicle speed control member 82, such as for example a pedal accelerator or a lever, which sends to the electronic control unit U a reference signal ACC* for speed or acceleration. The signal ACC* contains information or data relating to the speed or acceleration desired by the driver for the vehicle; and
- to a vehicle speed sensor 84, such as an optical encoder or a tachometer, which sends to the electronic control unit U a signal V* relative to the actual angular speed or acceleration of the wheel 92. The signal V* contains information or data relating to the actual angular speed or acceleration of the wheel 92, and therefore of the vehicle.

The electronic control unit U is programmed

to read the signal ST* and drive the motor M3 to obtain the desired steering (i.e. a desired angle $\beta$), and
to read the signal ACC* and the signal coming from the speed sensor 84, to then drive the motors M1, M2 in order to maintain the vehicle speed at the set reference, through e.g. known feedback control schemes.

To solve the bump steering problem, the system MC works as follows, see Fig. 2 showing a block diagram that describes calculation steps in the control unit U.

The signal ST* is processed in the electronic control unit U by a computation block W1 to generate a reference $\beta$* of the steering angle, which is then processed by a computing block W2 to generate an electric reference SM3* with which to drive the motor M3 to get the desired steering angle. E.g. the electric reference SM3* is the input reference of a feedback control acting on the motor M3.

To compensate for the steering bump, the computation block W2 generates the electrical reference SM3* as a function of a second signal S, wherein S indicates the deviation of the wheel 92's level compared to its nominal value (the one without impact, hump or hole or the one related to a straight trajectory for the vehicle).

In other words, SM3* = F (S; $\beta$*), where F () is a two-variable mathematical function or an algorithm, executed inside the block W2.

The signal or data S may be calculated, e.g.

- from a signal LV of feedback M1f, M2f coming from the motors M1 M2 respectively, and then processed by a computing block W3, and/or
- from a signal $\alpha_{current}$ coming from a sensor 88 that detects the angle $\alpha$ in real time. The electronic control unit U e.g. calculates in the block W4, which for example is a subtractor, the difference

$$\Delta\alpha^* = \alpha^* - \alpha_{current}$$

and uses $\Delta\alpha^*$ as a further argument of a function or algorithm for calculating the electrical signal SM3*. The angular reference $\alpha^*$ is e.g. obtained by processing the signal ST* through a computational block W5.

When the wheel 92 does not have the height it should on flat or regular ground (case e.g. of $\Delta\alpha^*\neq0$), by means of the block W2 the electric signal SM3* is altered to compensate for the variation of steering due to changes in the wheel 92's suspension, i.e. the *bump steering.* That is, the block W2 adds to the electrical signal SM3* a contribution, derived from the signal LV or $\Delta\alpha^*$, which remains as long as the anomaly remains in the suspension, and such contribution, function of LV and/or $\Delta\alpha^*$, translates into a corrective movement of the motor M3 on the wheel 92. Said corrective movement re-establishes the correct angle $\beta$ which guarantees a steering direction as set by - and desired with - the signal ST* In the illustrated example, said corrective movement consists of a displacement of the member 91.

E.g. the block W2 may be a look-up table, which has two or three input indices (e.g. $\Delta\alpha^*$, LV and $\beta^*$) and an output data (i.e. SM3*). The look-up table contains a tabulated value of the electrical signal SM3* for each $\beta^*$ and various values of LV and/or $\Delta\alpha^*$. Or the calculation in the block W2 may be executed in real time in the digital domain, if for example the signals in fig. 2 are digital, i.e. obtained by sampling, or analog.

The representation of fig. 2 is only illustrative of the general logic, some computational blocks being able to be implemented or arranged in different ways or even absent. Not necessarily the system must provide for the calculation of LV or $\Delta\alpha^*$, one of the two or another equivalent signal being sufficient.

Or the signal SM3* can be derived by exploiting other signals. E.g. some of the computational blocks as illustrated, or all, may be integrated into one another or made with just one algorithm calculated within a microprocessor.

Fig. 4 shows a diagram of the actuator M3. It is a rotary electric motor equipped with a screw 70 and a recirculating ball nut screw 72. The screw 70 is integral with the member 91 (e.g. a piston) and the nut screw 72 is integral with a rotor 74 of the motor 50. An optional but advantageous protection cap 76 is present, e.g. made of rubber, to prevent dirt from entering the screw.

The control of motor 50 allows the member 91 to move back and forth to control the angle $\beta$.

The system MC is open to many variations and variables.

The electric motors M1, M2 must not necessarily be equal.

On the shaft 90 it is preferable to mount at least one joint, e.g. a Cardan joint, to allow or facilitate the offset of the axes W and X and/or a different orientation of the axis W.

Each stator M1s, M2s may be connected to the point P also by means different from the arms 22, 24, and the point P does not necessarily represent a geometric point, it can also be - for mechanical needs - an extended element to which the stators M1s, M2s are connected at slightly spaced points.

The lever 40 may be oscillating at a point other than its center, and the axis Y fixed with respect to the frame may be obtained e.g. by simple pivoting.

Also the arrangement of the points Q and P on the lever 40 can vary, as well as the means for transferring from the point Q to the wheel 92 the force generated by moving the stators M1s, M2s.

It is preferable to mount a mechanical (e.g. helical) spring or a gas spring in parallel to the arm 26, between the wheel 92 and the frame, to compensate for the weight of the frame.

The signals of fig. 1 and/or 2 may be digital, e.g. obtained by sampling of electric quantities, or analog.

The motor M3 may also be of pneumatic type.

The kinematic chain of the wheel suspension is not essential, being sufficient to be able to vary the wheel-frame distance using the electric motors.

**Claims**

1. Suspension and traction system for a vehicle equipped with a frame and a propulsive element (92), which is propulsive by rolling on the ground and adapted to move the vehicle relative to the ground, comprising:

   - two rotary electric motors (M1, M2), which

     are mounted to impart an angular torque in equal directions to the propulsive element to propel the vehicle on the ground,
     are independently controllable from one another and
     each comprises a stator (M1s, M2s) and a rotor (M1r, M2r);

   wherein

     the two rotors (M1r, M2r)

are coupled to the propulsive element (92) to transfer to it rotary motion through a transmission shaft (90), and have a common rotation axis (X) which is fixed with respect to the vehicle's frame; and

the stators (M1s, M2s) are

controllable to rotate about the respective rotor independently of each other, and

rigidly connected substantially to a same point (P), external to the motors, to exert a thrust generated by a coordinated angular displacement of theirs about the respective rotors in opposite angular directions;

- a mechanical transmission (26) for transmitting the thrust generated on said point (P) to the propulsive element, the thrust thereby determining the relative position of the propulsive element with respect to the frame,

**characterized by** comprising a sensor (88) for detecting said relative position, an electric actuator (M3) mounted for determining a steering angle ($\beta$) of the propulsive element, and an electronic control unit (U) for controlling said motors (M1, M2), wherein the electronic control unit (U) is configured for controlling the actuator to impose the steering angle ($\beta$) of the propulsive element according to a reference value (ST*) set by the driver of the vehicle, the electronic control unit (U) being configured

- to calculate said steering angle as a function of said reference value (ST*) and of a value ($\alpha_{current}$) indicating said relative position,
- to calculate the value indicating said relative position by processing feedback signals (M1f, M2f) coming from the first and second motor (M1, M2).
- to calculate the value indicating said relative position by processing position signals (M1f, M2f) relative to the angular position of the first and second stator (M1s, M2s), and

to correct the deviation with respect to said reference value (ST*) caused by a vertical oscillation of the propulsive element (92) with respect to its plane of rolling.

2. System according to claim 1, comprising:

a steering wheel (80) or a lever for setting said reference value (ST*), a sensor to detect the action of the driver on the steering wheel (80) or the lever, the electronic control unit (U) being connected to the sensor

to detect the action of the driver on the steering wheel (80) or the lever, and from the signal detected by sensor, to determine or calculate a directional reference to be imposed then on the wheel through the actuator (M3).

3. Bump steering correction method implemented within the system according to any one of the preceding claims, with the step of calculating the steering angle ($\beta$) to be imposed on the propulsive element (92) as a function of the reference value (ST*) and the value ($\alpha_{current}$) indicating the relative position of the propulsive element (92) and the frame, so as to correct the deviation with respect to said reference value caused by a vertical oscillation of the propulsive element (92) with respect to its plane of rolling.

4. Method according to claim 3, wherein from the calculated steering angle ($\beta$) there is produced a control signal for the actuator (M3).

5. Method according to claim 4, wherein saidacontrol signal is produced through a table or mathematical function.

6. Bump steering correction method implemented within the system according to claims 1 or 2, with the steps of detecting in real time two values: the actual steering angle and the actual value of said relative position (LV, $\alpha_{current}$), with the two values a control signal (SM3*) is produced for the actuator (M3) so as to always return the steering to the value set by the driver and equal to the value that one would have without the road imperfection.

7. Method according to claim 6, wherein the value (LV) or signal indicating said relative position is obtained by processing feedback signals coming from the first and second motor (M1, M2).

8. Method according to claim 6 or 7, wherein the value or signal indicating said relative position is obtained by processing position signals related to the angular position of the stator of the first and second motor (M1, M2).

9. Method implemented within the system according to claims 1 or 2, wherein

the current steering angle is detected in real time,
the current steering angle is compared with the nominal one (ST*), i.e. the value set by the driver and equal to the value with no road imperfection;
the comparison result ($\nabla\alpha$) is processed to generate a corrective control signal (SM3*) for an actuator (M3) acting on the propulsive element (92), in particular said actuator (M3),
so that the displacement of the actuator (M3) induced by the correction signal brings the steering angle ($\beta$) back to the value set by the driver (ST*) and equal to the value with no road imperfection.

**Patentansprüche**

1. Aufhängungs- und Traktionssystem für ein Fahrzeug, das mit einem Rahmen und einem Antriebselement (92) ausgestattet ist, das durch Abrollen auf dem Rahmen angetrieben wird und geeignet ist, das Fahrzeug relativ zum Rahmen zu bewegen, umfassend:

- zwei rotierende Elektromotoren (M1, M2), die sind so angebracht, dass sie
ein Winkeldrehmoment in gleichen Richtungen auf das Antriebselement ausüben, um das Fahrzeug auf dem Rahmen anzutreiben,

unabhängig voneinander steuerbar sind und
umfasst jeweils einen Stator (M1s, M2s) und einen Rotor (M1r, M2r);
wobei
die beiden Rotoren (M1r, M2r)

mit dem Antriebselement (92) gekoppelt sind, um eine Drehbewegung über eine Übertragungswelle (90) auf dieses zu übertragen, und
eine gemeinsame Drehachse (X) haben, die in Bezug auf den Rahmen des Fahrzeugs fest ist; und

die Statoren (M1s, M2s) sind

die so gesteuert werden können, dass sie sich unabhängig voneinander um den jeweiligen Rotor drehen, und
die im Wesentlichen mit demselben Punkt (P) außerhalb der Motoren starr verbunden sind, um einen Schub auszuüben, der durch eine koordinierte Winkelverschiebung der Rotoren um die jeweiligen Rotoren in entgegengesetzten Winkelrichtungen erzeugt wird;

- ein mechanisches Getriebe (26), um den an dem Punkt (P) erzeugten Schub auf das Antriebselement zu übertragen, wobei der Schub die relative Position des Antriebselements in Bezug auf den Rahmen bestimmt,

**dadurch gekennzeichnet, dass** es umfasst
einen Sensor (88) zum Erfassen dieser relativen Position,
ein elektrisches Stellglied (M3), das zur Bestimmung eines Lenkwinkels ($\beta$) des Antriebselements angebracht ist, und
eine elektronische Steuereinheit (U) zum Steuern der Motoren (M1, M2), wobei die elektronische Steuereinheit (U) so konfiguriert ist, dass
sie den Aktuator steuert, um den Lenkwinkel ($\beta$) des Antriebselements gemäß einem vom Fahrer des Fahrzeugs eingestellten Referenzwert (ST*) vorzuschreiben,
die elektronische Steuereinheit (U) ist konfiguriert

- den Lenkwinkel in Abhängigkeit von dem Referenzwert (ST*) und einem Wert ($\alpha_{current}$) zu berechnen, der die relative Position angibt,
- den Wert zu berechnen, der die relative Position angibt, indem Rückkopplungssignale (M1f, M2f) verarbeitet werden, die von dem ersten und zweiten Motor (M1, M2) kommen.
- den Wert zu berechnen, der die relative Position angibt, indem Positionssignale (M1f, M2f) relativ zur Winkelposition des ersten und zweiten Stators (M1s, M2s) verarbeitet werden, und
- die Abweichung in Bezug auf den Referenzwert (ST*) zu korrigieren, die durch eine vertikale Schwingung des Antriebselements (92) in Bezug auf seine Rollebene verursacht wird.

2. System nach Anspruch 1, umfassend:

ein Lenkrad (80) oder einen Hebel zum Einstellen des Referenzwertes (ST*),
einen Sensor, der die Bewegung des Fahrers am Lenkrad (80) oder am Hebel erfasst,
die elektronische Steuereinheit (U) ist mit dem Sensor verbunden
die Betätigung des Lenkrads (80) oder des Hebels durch den Fahrer zu erfassen, und
aus dem vom Sensor erfassten Signal einen Richtungsbezug zu bestimmen oder zu berechnen, der dann dem Rad durch den Aktuator (M3) aufgezwungen wird.

3. Verfahren zur Korrektur der Bodenwellenlenkung, das in dem System nach einem der vorhergehenden Ansprüche implementiert ist, mit dem Schritt von Berechnung des dem Antriebselement (92) aufzuerlegenden Lenkwinkels ($\beta$) in Abhängigkeit vom Referenzwert (ST*) und dem Wert ($\alpha_{current}$), der die relative Position des Antriebselements (92) und des Rahmens angibt,
um die Abweichung vom Referenzwert zu korrigieren, die durch eine vertikale Schwingung des Antriebselements (92) in Bezug auf seine Rollebene verursacht wird.

4. Verfahren nach Anspruch 3, wobei aus dem berechneten Lenkwinkel ($\beta$) ein Steuersignal für den Stellantrieb (M3) erzeugt wird.

5. Verfahren nach Anspruch 4, wobei das Steuersignal durch eine Tabelle oder eine mathematische Funktion erzeugt wird.

6. Verfahren zur Korrektur der Bodenwellenlenkung, das in dem System nach
einem der vorhergehenden Ansprüche 1 bis 2 implementiert ist, mit den folgenden Schritten:

erfassung von zwei Werten in Echtzeit: der aktuelle Lenkwinkel und der aktuelle Wert der relativen Position (LV, $\alpha_{current}$),
mit den beiden Werten wird ein Steuersignal (SM3*) für den Aktuator (M3) erzeugt, um die Lenkung immer auf den vom Fahrer eingestellten Wert zurückzubringen, der gleich dem Wert ist, den man ohne die Fahrbahnunebenheit hätte.

7. Verfahren nach Anspruch 6, wobei der Wert (LV) oder das Signal, das die relative Position anzeigt, durch Verarbeitung von Rückkopplungssignalen erhalten wird, die von dem ersten und zweiten Motor (M1, M2) kommen.

8. Verfahren nach Anspruch 6 oder 7, wobei der Wert oder das Signal, das die relative Position anzeigt, durch die Verarbeitung von Positionssignalen erhalten wird, die mit der Winkelposition des Stators des ersten und zweiten Motors (M1, M2) zusammenhängen.

9. Verfahren, das in dem System nach Anspruch 1 oder 2 implementiert ist, wobei

der aktuelle Lenkwinkel in Echtzeit ermittelt wird,

der aktuelle Lenkwinkel wird mit dem Sollwert (ST*) verglichen, d. h. dem vom Fahrer eingestellten Wert, der dem Wert ohne Fahrbahnunebenheiten entspricht;
das Vergleichsergebnis (Va) verarbeitet wird, um ein korrigierendes Steuersignal (SM3*) für einen Aktuator (M3) zu erzeugen, der auf das Antriebselement (92), insbesondere den Aktuator (M3), wirkt,
so dass die durch das Korrektursignal hervorgerufene Auslenkung des Stellglieds (M3) den Lenkwinkel ($\beta$) wieder auf den vom Fahrer eingestellten Wert (ST*) bringt und dem Wert ohne Fahrbahnunebenheiten entspricht.

**Revendications**

1. Système de suspension et de traction pour un véhicule équipé d'un châssis et d'un élément d'entraînement (92) qui est entraîné par roulement sur le sol et qui est adapté pour déplacer le véhicule par rapport au sol, comprenant :

- deux moteurs électriques rotatifs (M1, M2) qui

sont montés de manière à exercer un couple angulaire dans des directions identiques sur l'élément moteur afin de propulser le véhicule au sol,
peuvent être commandés indépendamment les uns des autres et
comprend respectivement un stator (M1s, M2s) et un rotor (M1r, M2r) ;

où

les deux rotors (M1r, M2r)

sont couplés à l'élément d'entraînement (92) pour lui transmettre un mouvement de rotation par l'intermédiaire d'un arbre de transmission (90), et
ont un axe de rotation commun (X) qui est fixe par rapport au châssis du véhicule ; et

les stators (M1s, M2s)

peuvent être commandés de manière à tourner indépendamment les uns des autres autour de leur rotor respectif, et sont reliés de manière rigide sensiblement au même point (P) à l'extérieur des moteurs, afin d'exercer une poussée générée par un déplacement angulaire coordonné des rotors autour des rotors respectifs dans des directions angulaires opposées ;

- une transmission mécanique (26) pour transmettre la poussée générée au niveau du point (P) à l'élément d'entraînement, la poussée déterminant la position relative de l'élément d'entraînement par rapport au cadre,

**caractérisé en ce qu'il** comprend
un capteur (88) pour détecter cette position relative,
un actionneur électrique (M3) monté pour déterminer un angle de braquage (β) de l'élément d'entraînement, et
une unité de commande électronique (U) pour commander les moteurs (M1, M2), l'unité de commande électronique (U) étant configurée pour commander l'actionneur afin de prescrire l'angle de braquage (β) de l'élément d'entraînement selon une valeur de référence (ST*) établie par le conducteur du véhicule,
l'unité de contrôle électronique (U) est configurée pour

- calculer l'angle de braquage en fonction de la valeur de référence (ST*) et d'une valeur ($\alpha_{current}$) indiquant la position relative,
- calculer la valeur indiquant la position relative en traitant des signaux de rétroaction (M1f, M2f) provenant des premier et deuxième moteurs (M1, M2).
- calculer la valeur indiquant la position relative en traitant des signaux de position (M1f, M2f) par rapport à la position angulaire des premier et deuxième stators (M1s, M2s), et
- corriger l'écart par rapport à la valeur de référence (ST*) provoqué par une oscillation verticale de l'élément d'entraînement (92) par rapport à son plan de roulement.

2. Système selon la revendication 1, comprenant :

un volant (80) ou un levier pour régler la valeur de référence (ST*),
un capteur qui détecte le mouvement du conducteur au niveau du volant (80) ou du levier,
l'unité de commande électronique (U) est reliée au capteur pour
détecter l'actionnement du volant (80) ou du levier par le conducteur, et
déterminer ou calculer, à partir du signal détecté par le capteur, une référence de direction qui est ensuite imposée à la roue par l'actionneur (M3).

3. Procédé de correction de la direction de l'onde de choc, mis en oeuvre dans le système selon l'une quelconque des revendications précédentes, comprenant l'étape de

calculer l'angle de braquage (β) à imposer à l'élément moteur (92) en fonction de la valeur de référence (ST*) et de la valeur ($\alpha_{current}$) indiquant la position relative de l'élément moteur (92) et du châssis,
pour corriger l'écart par rapport à la valeur de référence provoqué par une oscillation verticale de l'élément d'entraînement (92) par rapport à son plan de roulement.

4. Procédé selon la revendication 3, dans lequel un signal de commande pour l'actionneur (M3) est généré à partir de l'angle de braquage calculé (β).

5. Procédé selon la revendication 4, dans lequel le signal de commande est généré par une table ou une fonction mathématique.

6. Procédé de correction de la direction de l'onde de choc, mis en oeuvre dans le système selon l'une quelconque des revendications précédentes 1 à 2, comprenant les étapes suivantes

saisie de deux valeurs en temps réel: l'angle de braquage actuel et la valeur actuelle de la position relative (LV, $\alpha_{current}$),
ces deux valeurs permettent de générer un signal de commande (SM3*) pour l'actionneur (M3) afin de toujours ramener la direction à la valeur définie par le conducteur, qui est égale à la valeur que l'on aurait si la route n'était pas accidentée.

7. Procédé selon la revendication 6, dans lequel la valeur (LV) ou le signal indiquant la position relative est obtenu par traitement de signaux de rétroaction provenant des premier et deuxième moteurs (M1, M2).

8. Procédé selon la revendication 6 ou 7, dans lequel la valeur ou le signal indiquant la position relative est obtenu par le traitement de signaux de position liés à la position angulaire du stator des premier et deuxième moteurs (M1, M2).

9. Procédé mis en oeuvre dans le système selon la revendication 1 ou 2, dans lequel

l'angle de braquage actuel est déterminé en temps réel,
l'angle de braquage actuel est comparé à la valeur de consigne (ST*), c'est-à-dire la valeur définie par le conducteur, qui correspond à la valeur sans irrégularités de la chaussée,
le résultat de la comparaison (Va) est traité pour générer un signal de commande correctif (SM3*) pour un actionneur (M3) qui agit sur l'élément d'entraînement (92), en particulier l'actionneur (M3),

de sorte que la déviation de l'organe de commande (M3) provoquée par le signal de correction ramène l'angle de braquage ($\beta$) à la valeur (ST*) réglée par le conducteur et correspond à la valeur sans irrégularités de la chaussée.

Fig. 1

Fig. 2

Fig. 3

Fig. 4

EP 3 724 018 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2015155670 A